# EUROPEAN PATENT APPLICATION

(11) **EP 4 282 310 A1**
(43) Date of publication of application: **29.11.2023**
(21) Application number: 23171451.0
(22) Date of filing: 04.05.2023
(51) Int. Cl.: A47J 37/06, F24C 15/16

(54) **GRILL PLATE**

(30) Priority: 27.05.2022 SI 202200080
(71) Applicant: Gorenje, d.o.o., 3320 Velenje (SI)
(72) Inventor: Brozi , Luka, 51500 Krk (HR); Ratering, Karen, 3531 AK Utrecht (NL); Janezi , Klavdija, 3320 Velenje (SI); Parasuh, Spela, 3330 Mozirje (SI)
(74) Representative: Ivancic, Bojan

(57) **Abstract**

The present invention relates to a grill plate comprising at least one receiving surface, which is intended to receive food to be baked, and at least one resting surface, which is intended to be placed on a worktop, such as a table. The said grill plate is intended to be removable mounted onto the pull-out rack guides of a household oven and is formed as a rectangle with two double-sided baking surfaces (1, 2).

## Description

The present invention relates to a grill plate comprising at least one receiving surface intended to receive the food to be baked, and at least one resting surface, intended to be placed on a worktop, such as a table.

A grill plate of the type referred to above is known, but it is intended to be heated on an induction cooking appliance and it comprises only one receiving surface, which is intended to receive the food to be baked, and only one resting surface, which is intended to be placed on a worktop, such as a table. The said known grill plate only comprises one surface suitable for baking. Furthermore, the known grill plate does not allow for mounting onto the rack guides inside a household oven.

The object of the present invention is to create a grill plate which remedies the shortcomings of the known solutions.

The object according to the present invention is accomplished by the characteristics set forth in the characterising portion of claim 1. The details of the invention are disclosed in the corresponding sub-claims.

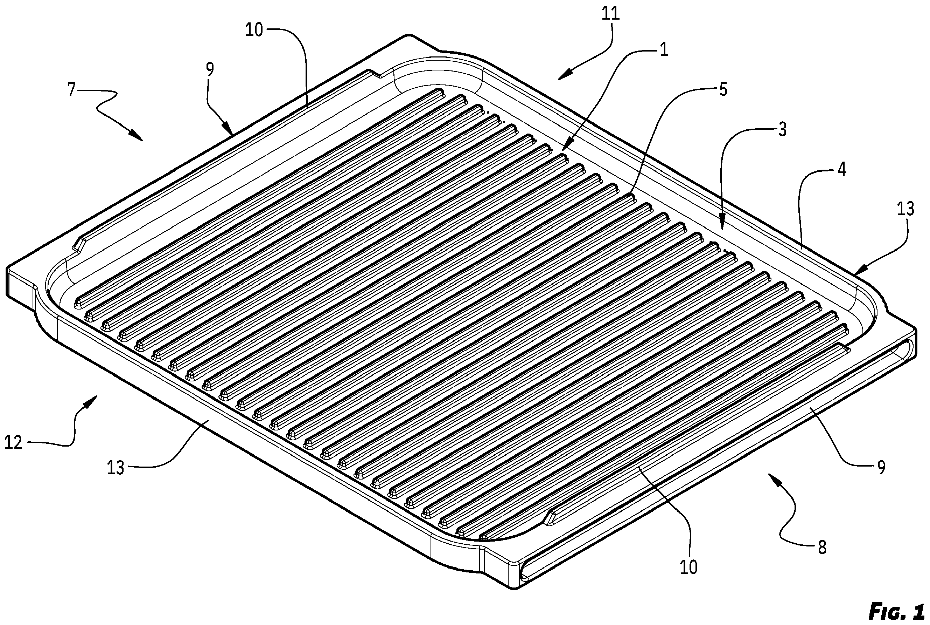

The invention is further described in detail by way of a non-limiting embodiment and with a reference to the accompanying drawings where
- Fig. 1: shows a three-dimensional view of the grill plate from a first side; and

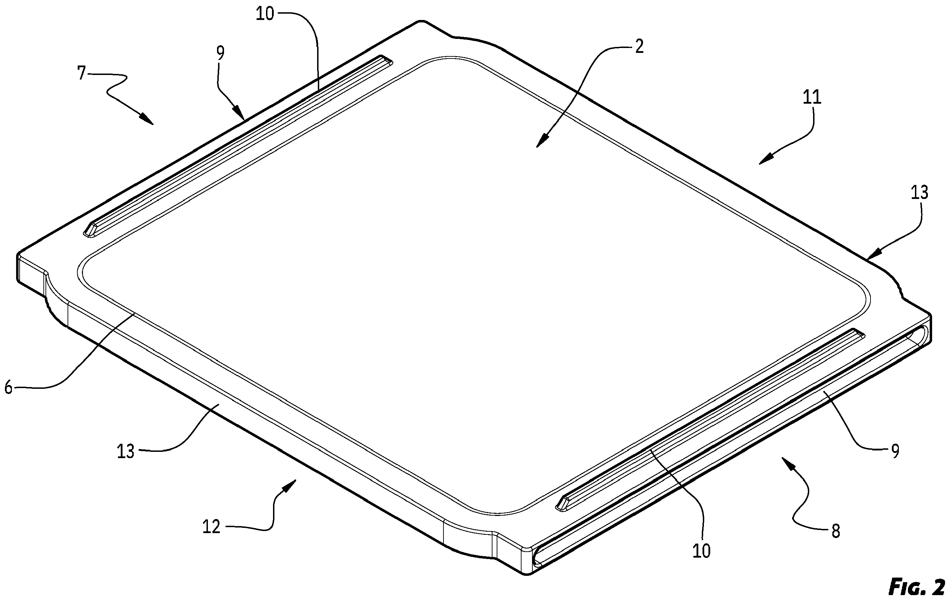

- Fig. 2: shows a three-dimensional view of the grill plate from the other side.

A grill plate according to the invention, which is intended to be removable mounted onto the pull-out rack guides of a household oven, is formed in a sense of a rectangle with double-sided baking surfaces 1, 2. The said surfaces 1, 2 can either be the same or differ from each other.

In the presented non-limiting embodiment, the first baking surface 1 is designed as an indentation 3 in the grill plate, whereby the said indentation 3 is at least partly, but preferably completely surrounded by a wall 4, which runs along the outer rim of the first baking surface 1. Furthermore, a plurality of ribs 5 is integrally formed in said indentation 3, said ribs 5 arranged in a random raster. The said raster of ribs 5 is formed, for example, in a sense of mutually spaced and, relative to the grill plate, longitudinally or transversally extending ribs, mutually intersecting ribs and similar, wherein the said ribs 5 extend, at least in part, continuously along the entire length thereof.

Furthermore, in the presented non-limiting embodiment, the second baking surface 2 is preferably formed in the same plane over the entire grill plate, wherein the said second baking surface 2 is separated from the other part of the grill plate by a collecting channel 6, extending along the entire outer rim of the second baking surface 2. The said collecting channel 6 is intended to collect any juices that might be released from the food to be baked.

It is provided for, according to the present invention, that the said grill plate is formed on both first opposing sides 7, 8 with holding notches 9 enabling safe handling with the grill plate.

At the peripheral area of the said opposing sides 7, 8, said grill plate is formed on the side of each backing surface 1, 2 with a resting rib 10 extending at least partially along each said peripheral area of the opposing sides 7, 8. The said, mutually identical pairs of ribs 10 are intended for placing the grill plate onto a worktop, such as a table. Thus, it is prevented the grill plate to come into direct contact with the worktop.

In addition, the said resting ribs 10 are also formed as spacers when the grill plate according to the invention is placed onto a pair of pull-out rack guides of a household oven. In such a case, the grill plate fits on a pair of pull-out rack guides while the said ribs 10 are located in the area between the pair of pull-out rack guides, particularly, each rib 10 is arranged in the direct area of the said pull-out rack guide. By means of the said ribs 10, pulling out the grill plate on the rack guides prevents any transversal and/or twisting movement of the grill plate in relation to the pull-out rack guides and, consequently, any random unmounting of the grill plate from the pull-out rack guides.

Furthermore, the grill plate according to the invention is formed on its other sides 11, 12, which are orthogonal to each said surface 1, 2 as well as to the said first sides 7, 8, and over at least partly along its length, preferably along the entire length, an embossment 13 intended to cooperate with a temperature sensor not shown, arranged in the area of a back portion of the oven. It is achieved by means of the said ribs 10 mentioned above, that the said sensor is always in close contact with the said corresponding embossment 13 of each side 11, 12.

The grill plate according to the invention is made either of metal, such as cast iron or cast aluminium coated with a non-stick coating. An embodiment of the grill plate made of ceramic, stone, plastic, and similar materials, is also possible.

## Claims

1. A grill plate, comprising at least one receiving surface intended to receive the food to be baked, and at least one resting surface intended to be placed on a worktop, such as a table, ***characterised in that*** it is intended to be removable mounted onto pull-out rack guides of a household oven, and resembles a rectangular form having two double-sided baking surfaces (1, 2).

2. The grill plate according to claim 1, ***characterised in that*** the said baking surfaces (1, 2) can either be identical or differ from each other.

3. The grill plate according to claims 1 and 2, ***characterised in that*** the first baking surface (1) is formed as an indentation (3) in the grill plate, whereby the said indentation (3) is at least partly, preferably completely, surrounded by a wall (4), which extends along the outer rim of the first surface (1).

4. The grill plate according to claim 3, ***characterised in that*** a plurality of ribs (5) is formed in the said indentation (3), said ribs being integral with the plate and arranged in a raster.

5. The grill plate according to claims 1 to 3, ***characterised in that*** the second baking surface (2) is formed in the same plane over the entire grill plate, whereby the said second baking surface (2) is separated from the other part of the grill plate by means of a collecting channel (6) extending along the entire outer rim of the second surface (2).

6. The grill plate according to one of the preceding claims, ***characterised in that*** the first two opposing sides (7, 8) of the said grill plate are formed with holding notches (9).

7. The grill plate according to one of the preceding claims, ***characterised in that*** said grill plate is formed at the peripheral area of the said opposing sides (7, 8) and on the side of each backing surface (1, 2) with a resting rib (10) extending at least partially along each said peripheral area of the opposing sides (7, 8).

8. The grill plate according to one of the preceding claims, ***characterised in that*** on its two other sides (11, 12), which are orthogonal to each said surface (1, 2) as well as to the said first two sides (7, 8), it is formed, at least along a part of its length with an embossment (13) intended to cooperate with a temperature sensor, arranged in the area of a back portion of an oven.

9. The grill plate according to one of the preceding claims, ***characterised in that*** it is made either of metal, such as cast iron or cast aluminium coated with a non-stick coating, or of ceramic, stone, plastic, and similar materials.
